(19) Europäisches Patentamt / European Patent Office / Office européen des brevets

(11) **EP 3 714 588 B1**

(12) **FASCICULE DE BREVET EUROPEEN**

(45) Date de publication et mention
de la délivrance du brevet:
**11.05.2022   Bulletin 2022/19**

(21) Numéro de dépôt: **18800988.0**

(22) Date de dépôt: **20.11.2018**

(51) Classification Internationale des Brevets (IPC):
***H04L 67/563*** *(2022.01)*

(52) Classification Coopérative des Brevets (CPC):
**H04L 67/2814**

(86) Numéro de dépôt international:
**PCT/EP2018/081916**

(87) Numéro de publication internationale:
**WO 2019/101736 (31.05.2019 Gazette 2019/22)**

(54) **PROCEDE DE GESTION A DISTANCE D'UN DISPOSITIF CONNECTE A UNE PASSERELLE RESIDENTIELLE**

VERFAHREN ZUR FERNVERWALTUNG EINER AN EIN RESIDENTIAL-GATEWAY ANGESCHLOSSENEN VORRICHTUNG

METHOD FOR REMOTE MANAGEMENT OF A DEVICE CONNECTED TO A RESIDENTIAL GATEWAY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.11.2017   FR 1761160**

(43) Date de publication de la demande:
**30.09.2020   Bulletin 2020/40**

(73) Titulaire: **Sagemcom Broadband SAS
92500 Rueil-Malmaison (FR)**

(72) Inventeurs:
  • **CAMPAGNAC, Isabelle
    92500 Rueil Malmaison (FR)**
  • **CLUZEAU, Fabrice
    92500 Rueil Malmaison (FR)**

(74) Mandataire: **Cabinet Le Guen Maillet
3, impasse de la Vigie
CS 71840
35418 Saint-Malo Cedex (FR)**

(56) Documents cités:
**WO-A1-2016/093724      WO-A2-2008/055081
US-B1- 9 680 801**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de gestion à distance d'un dispositif connecté à un réseau local, ledit réseau local étant connecté à un réseau internet par l'intermédiaire d'une passerelle résidentielle, et un équipement mettant en œuvre le procédé.

Beaucoup de dispositifs embarquent actuellement des logiciels qui peuvent, et même doivent, être mis à jour régulièrement afin d'offrir de nouvelles fonctionnalités aux utilisateurs, améliorer le fonctionnement de ces dispositifs ou corriger des défauts de conception logicielle (bogue). C'est le cas notamment des téléphones intelligents, des tablettes, des ordinateurs, des téléviseurs numériques, etc, qui sont fréquemment mis à jour. Les dispositifs DECT (télécommunication numérique sans fil améliorée, « Digital Enhanced Cordless Télécommunication » en terminologie anglo-saxonne) respectant la norme ETSI TS 102 527 n'échappent pas à ce besoin de mise à jour.

La norme DECT permet des communications à courte portée dans une entreprise ou dans une habitation. Un dispositif DECT peut toutefois communiquer à longue distance à condition de le connecter, par exemple par une liaison sans fil, à un équipement, tel qu'une passerelle résidentielle (« residential gateway »), appelée simplement *passerelle* par la suite. Une passerelle permet un transfert de données provenant du dispositif DECT sur un réseau étendu (Wide Area Network (WAN)) tel que le réseau internet. Ainsi, deux dispositifs DECT situés dans des réseaux DECT différents, chacun relié à internet par l'intermédiaire d'une passerelle, peuvent communiquer. On dit alors que chaque passerelle sert d'interface entre un « monde DECT » symbolisant un réseau local (Local Area Network (LAN) en terminologie anglo-saxonne) de dispositifs DECT et un « monde IP » symbolisant le réseau internet.

La partie 4 de la norme ETSI TS 102 527 (ETSI TS 102 527-4) aussi appelée *DECT CAT-iq data* (technologie sans fils avancée - internet et qualité - données « Cordless Advanced Technology - internet and quality - data » en terminologie anglo-saxonne) donne des moyens de mises à jour d'un dispositif DECT. Ces moyens sont souvent regroupés sous l'acronyme SUOTA (mise à jour de logiciels par les airs, « Software Update Over The Air » en terminologie anglo-saxonne).

La norme DECT CAT-iq data définit un enchaînement d'opérations et des commandes permettant d'effectuer des opérations de mises à jour *(i.e.* des opérations de type SUOTA). Un dispositif DECT souhaitant effectuer une mise à jour, envoie une série de requêtes à une passerelle qui les met en forme pour pouvoir transmettre ces requêtes par l'intermédiaire du réseau internet à un serveur de gestion situé en dehors du réseau DECT.

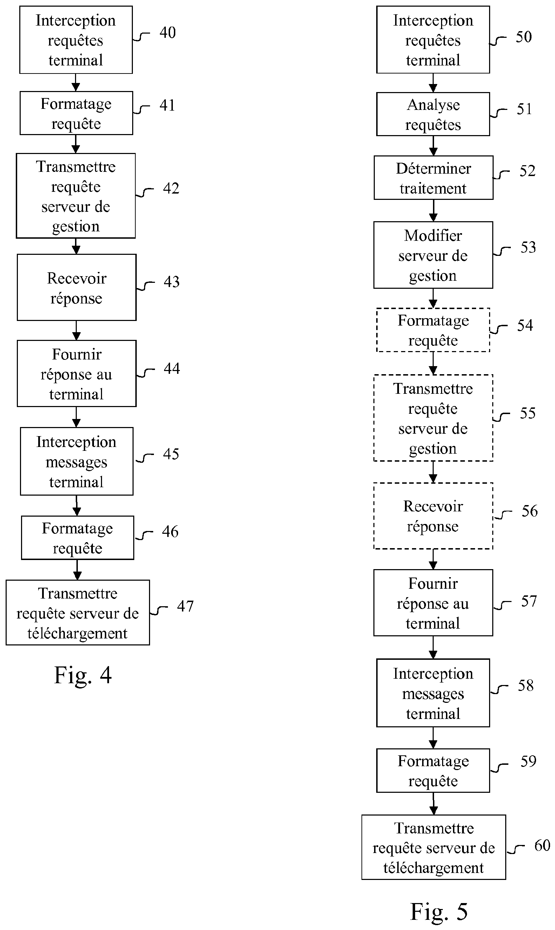

La Fig. 4 illustre schématiquement un procédé de l'art antérieur de mise à jour d'un dispositif DECT.

Le procédé de la Fig. 4 est une application classique de la norme DECT CAT-iq. Dans une étape 40, la passerelle intercepte une première requête contenant une commande CMBS_EV_DSR_SUOTA_HS_VERSION_INDICATION et une deuxième requête comprenant une commande CMBS_EV_DSR_SUOTA_URL_RECEIVED. La première requête comprend en outre :

- une information dite *EMC* (code constructeur de l'équipement : « Equipment Manufacturer Code » en terminologie anglo-saxonne) égale à une valeur *emc* fournissant un identifiant du dispositif DECT,
- une information dite *SWvid* (version du logiciel, « software version id » en terminologie anglo-saxonne) égale à une valeur *swvid* fournissant un identifiant d'une version du logiciel du dispositif DECT et,
- une information dite *HWvid* (version du matériel, « Hardware version id » en terminologie anglo-saxonne) égale à une valeur *hwvid* fournissant un identifiant d'une version de matériel du dispositif DECT.

La deuxième requête comprend en outre une adresse dite *URL indication* (localisateur uniforme de ressource : « Uniform Resource Locator » en terminologie anglo-saxonne) du serveur de gestion égale à une valeur *url*.

Dans une étape 41, la passerelle met en forme les informations reçues dans une requête HTTP (protocole de transfert hypertexte, « HyperText Transfer Protocol » en terminologie anglo-saxonne), *i.e.* la passerelle construit une URL *FP_URL1* telle que:

$$FP\_URL1 = url?EMC=emc?SWvid=swvid?HWvid=hwvid$$

Dans une étape 42, la passerelle transmet la requête ainsi construite (par une commande HTTP GET) vers le serveur de gestion, *i.e.* vers le destinataire indiqué par l'URL FP_URL1.

Dans une étape 43, la passerelle reçoit une réponse du serveur de gestion (sous forme de commande HTTP 200 OK) contenant un identifiant *SW_UPDATE_vid* du logiciel à télécharger pour effectuer la mise à jour, et une URL *FP_URL2* correspondant à l'adresse du logiciel à télécharger (*i.e.* l'adresse d'un serveur de téléchargement capable de fournir la mise à jour du logiciel souhaitée).

Dans une étape 44, la passerelle transmet l'identifiant du logiciel à télécharger pour effectuer la mise à jour et l'URL *FP_URL2* respectivement dans une commande CMBS_EV_DSR_SUOTA_SEND_VERS_AVAIL_RES et dans une commande CMBS_EV_DSR_SUOTA_SEND_URL_RES.

Dans une étape 45, la passerelle intercepte une troisième requête en provenance du dispositif DECT contenant une commande destinée à télécharger une version du logiciel dont l'identifiant est *SW_UPDATE_vid* à l'adresse *FP_URL2.*

Dans une étape 46, la passerelle met en forme cette requête sous forme de commande HTTP GET et la transmet à l'adresse indiquée lors d'une étape 47.

On note donc que dans le procédé de la Fig. 4, la passerelle a un rôle relativement passif puisqu'elle se contente de mettre en forme des informations provenant du dispositif DECT pour pouvoir les transmettre sur le réseau internet. Par ailleurs, la passerelle transmet chaque requête à des serveurs (le serveur de gestion et le serveur de téléchargement) définis par le dispositif DECT. Or, chacun de ces serveurs pourrait ne pas avoir été agréé par l'opérateur de la passerelle. On pourrait en effet envisager qu'un opérateur définisse des serveurs à utiliser pour des questions de fiabilité, de sécurité ou de coût. <3a>

Il est souhaitable de pallier ces inconvénients de l'état de la technique. Il est notamment souhaitable de proposer une méthode qui permette à une passerelle de contrôler quels serveurs doivent être utilisés par un dispositif DECT utilisant ladite passerelle pour communiquer en dehors de son réseau DECT.

Il est de plus souhaitable de fournir une solution qui soit simple à mettre en œuvre et à faible coût.

Selon un premier aspect de la présente invention, la présente invention concerne un procédé de gestion à distance d'un dispositif connecté à un réseau local, ledit réseau local étant connecté à un réseau internet par l'intermédiaire d'une passerelle résidentielle, dite passerelle. Le procédé comprend, lorsqu'il est exécuté par la passerelle : intercepter une première requête en provenance du dispositif comprenant une adresse d'un premier serveur auquel la première requête est destinée, la première

Le document WO2008/055081 décrit un système pour configurer une pluralité d'entités de réseau par un serveur central, chacune des entités de réseau étant associée à un identifiant unique, et chacune des entités de réseau étant associée à au moins un prestataire de services ayant des données de paramétrages de configuration pour celles-ci.

Le document WO2016/093724 décrit un dispositif régulateur de réseau qui assure la protection d'un réseau local de systèmes clients contre toute menace affectant la sécurité informatique. requête ayant pour but d'obtenir une adresse d'un deuxième serveur avec lequel le dispositif doit être mis en relation ; analyser ladite première requête afin d'obtenir au moins un identifiant du dispositif; déterminer un traitement à appliquer à ladite première requête, parmi une pluralité de traitements, en fonction de l'identifiant du dispositif et d'une information de configuration obtenue d'un opérateur, ladite information de configuration comprenant une information représentative d'un ensemble de dispositifs, la pluralité de traitements comprenant un traitement, appelé redirection, appliqué lorsque le dispositif appartient audit ensemble de dispositifs consistant à répondre à la première requête sans mettre à contribution le premier serveur ; lorsque le traitement à appliquer est une redirection, fournir audit dispositif une réponse à ladite première requête contenant l'adresse du deuxième serveur afin que le dispositif puisse se mettre en relation avec le deuxième serveur.

Selon un mode de réalisation, la pluralité de traitements comprend deux types de redirections, une redirection locale et une redirection distante, dans la redirection locale, la passerelle a connaissance de l'adresse du deuxième serveur et génère sa réponse en utilisant cette adresse, dans la redirection distante, la passerelle génère une deuxième requête contenant les informations contenues dans la première requête, transmet la deuxième requête à un troisième serveur différent du premier serveur, reçoit une réponse contenant l'adresse du deuxième serveur de la part du troisième serveur et génère sa réponse en utilisant cette adresse.

Selon un mode de réalisation, la pluralité de traitements comprend en outre un traitement, dit traitement par défaut, à appliquer lorsque le dispositif n'appartient pas audit ensemble de dispositifs, le traitement par défaut consistant à générer une troisième requête à partir des informations contenues dans la première requête, à transmettre la troisième requête au premier serveur, puis à fournir audit dispositif une réponse à ladite première requête contenant une adresse d'un quatrième serveur fournie par le premier serveur afin que le dispositif puisse se mettre en relation avec le quatrième serveur ou consistant à transmettre une réponse au dispositif indiquant qu'aucune suite ne peut être donnée à la première requête.

Selon un mode de réalisation, la première requête est une demande de mise à jour d'un logiciel du dispositif, une redirection ou un traitement par défaut étant appliqué après vérification que la passerelle est apte à gérer des demandes de mises à jour émanant dudit dispositif, la pluralité de traitements comprenant transmettre une réponse au dispositif indiquant qu'aucune suite ne peut être donnée à la première requête lorsque la passerelle n'est pas apte à traiter des demandes de mises à jour émanant dudit dispositif.

Selon un mode de réalisation, lorsque la passerelle est apte à gérer des demandes de mises à jour émanant dudit dispositif, la passerelle vérifie en utilisant une information lui ayant été préalablement fournie par l'opérateur, qu'une mise à jour du logiciel est disponible, exécute une redirection lorsqu'une mise à jour est disponible ou transmet une réponse au dispositif indiquant qu'aucune mise à jour n'est disponible.

Selon un mode de réalisation, le dispositif est un dispositif implémentant la norme DECT CAT iq data et communicant avec la passerelle selon cette norme.

Selon un deuxième aspect de l'invention, l'invention concerne un dispositif compris dans une passerelle résidentielle, dite passerelle, interconnectant un réseau local à un réseau internet. Le dispositif comprend: des moyens d'interception pour intercepter une première requête en provenance d'un deuxième dispositif du réseau local, ladite requête comprenant une adresse d'un premier serveur auquel la première requête est destinée, la première requête ayant pour but d'obtenir une adresse d'un deuxième serveur avec lequel le deuxième dispositif doit être mis en relation ; des moyens d'analyse pour analyser ladite première requête afin d'obtenir au moins un identifiant du deuxième dispositif ; des moyens de détermination pour déterminer un traitement à appliquer à ladite première requête parmi une pluralité de traitements, en fonction de l'identifiant du deuxième dispositif et d'une information de configuration obtenue d'un opérateur, ladite information de configuration comprenant une information représentative d'un ensemble de deuxièmes dispositifs, la pluralité de traitements comprenant un traitement, appelé redirection, appliqué lorsque le deuxième dispositif appartient audit ensemble de deuxièmes dispositifs consistant à répondre à la requête sans mettre à contribution le premier serveur ; des moyens de fourniture pour fournir audit deuxième dispositif une réponse à ladite première requête contenant l'adresse du deuxième serveur afin que le deuxième dispositif puisse se mettre en relation avec le deuxième serveur.

Selon un troisième aspect de l'invention, l'invention concerne une passerelle résidentielle comprenant un dispositif selon le deuxième aspect.

Selon un quatrième aspect, l'invention concerne un programme d'ordinateur, comprenant des instructions pour mettre en œuvre, par un dispositif, le procédé selon le premier aspect lorsque ledit programme est exécuté par un processeur dudit dispositif.

Selon un cinquième aspect, l'invention concerne des moyens de stockage, stockant un programme d'ordinateur comprenant des instructions pour mettre en œuvre, par un dispositif, le procédé selon le premier aspect lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un exemple de système dans lequel est mise en œuvre l'invention ;
- la Fig. 2 illustre schématiquement un exemple de passerelle résidentielle ;
- la Fig. 3 illustre schématiquement un exemple d'architecture matérielle d'un module de traitement compris dans une passerelle résidentielle;
- la Fig. 4 illustre schématiquement un procédé de l'art antérieur de mise à jour d'un dispositif DECT ;
- la Fig. 5 illustre schématiquement un exemple de procédé de mise à jour d'un dispositif DECT selon l'invention ; et,
- la Fig. 6 illustre schématiquement un détail d'une étape du procédé de mise à jour d'un dispositif DECT selon l'invention.

Par la suite, l'invention est décrite dans un contexte de mise à jour d'un dispositif DECT tel qu'un téléphone, ledit téléphone étant connecté à une passerelle gérée par un opérateur. L'invention est toutefois aussi applicable dans d'autres contextes. L'invention est, par exemple, applicable à tout dispositif situé dans un réseau local, dit dispositif local, et devant communiquer avec un serveur situé en dehors du réseau local par l'intermédiaire d'une passerelle. L'invention est adaptée à tout dispositif local, autre qu'un dispositif DECT, tel qu'un ordinateur, un téléviseur, etc, devant effectuer des mises à jour, les mises à jour étant stockées sur un serveur distant. L'invention s'adresse aussi à des dispositifs locaux faisant des demandes de consommables à un serveur et pour lesquelles l'opérateur en charge de la passerelle souhaite définir le serveur auquel le dispositif local doit s'adresser pour obtenir les consommables. L'invention peut par exemple être adaptée à des imprimantes faisant des demandes de papier, de cartouches à encre, ou à des distributeurs automatiques de boissons, de friandises ou de sandwichs faisant des demandes de réassort à un serveur.

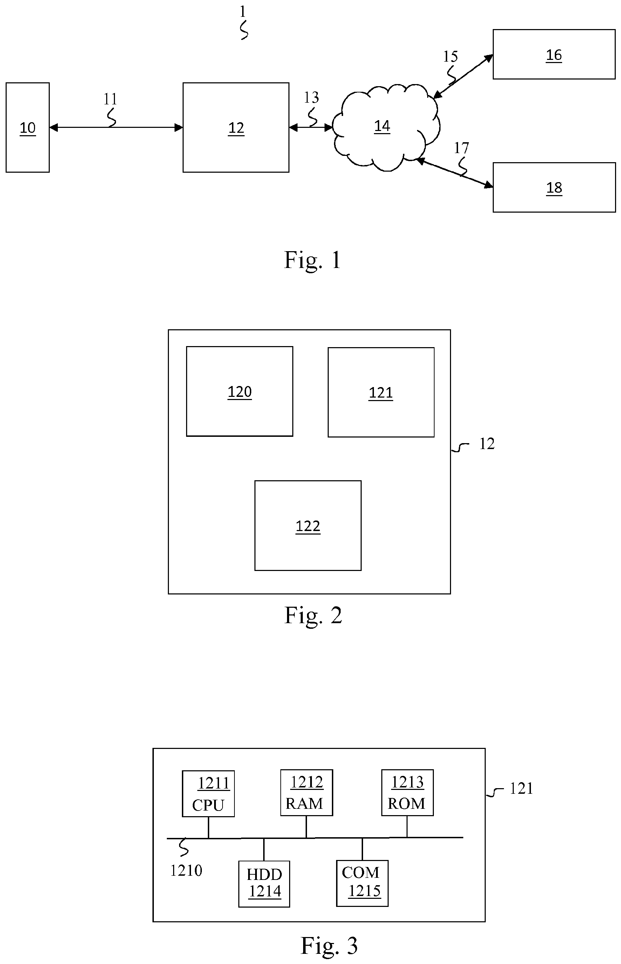

La **Fig. 1** illustre schématiquement un exemple de système 1 dans lequel est mise en œuvre l'invention.

Le système 1 comprend un dispositif DECT 10, tel qu'un téléphone sans fil connecté à une passerelle 12 par l'intermédiaire d'un réseau local LAN (Réseau Local, « Local Area Network » en terminologie anglo-saxonne) de type DECT, dit réseau DECT 11. La passerelle 12 interconnecte le réseau DECT 11 à un réseau WAN de type internet, dit réseau internet 14, par l'intermédiaire d'une liaison 13. Une pluralité de serveurs est connectée sur le réseau internet 14 dont un serveur de gestion 16 par l'intermédiaire d'une liaison 15 et un serveur de téléchargement 18 par l'intermédiaire d'une liaison 17.

La **Fig. 2** illustre schématiquement un exemple de passerelle 12.

La passerelle 12 comprend un module DECT 120 apte à communiquer avec des dispositifs DECT, tels que le dispositif DECT 10, un module WAN 122 apte à communiquer avec des dispositifs connectés sur le réseau internet 14 tels que le serveur de gestion 16 et le serveur de téléchargement 18 et un module de traitement 121 apte notamment à mettre en œuvre l'invention et à jouer un rôle d'interface entre le module DECT 120 et le module WAN 122.

La **Fig. 3** illustre schématiquement un exemple d'architecture matérielle du module de traitement 121 compris dans la passerelle 12. Le module de traitement 121 comprend alors, reliés par un bus de communication 1210: un processeur ou CPU (« Central Processing Unit » en anglais) 1211 ; une mémoire vive RAM (« Random Access Memory » en anglais) 1212; une mémoire morte ROM (« Read Only Memory » en anglais) 1213 ; une unité de stockage ou un lecteur de support de stockage, tel qu'un lecteur de cartes SD (« Secure Digital » en anglais) 1214 ; un ensemble d'interfaces de communication 1215 permettant au module de traitement 121 de communiquer avec d'autres modules de la passerelle 12 dont le module DECT 120 et le module WAN 122. L'ensemble d'interfaces de communication 1215 permet notamment au module de traitement 121 d'échanger des requêtes et des messages avec d'une part le dispositif DECT 10 par l'intermédiaire du module DECT 120 et avec les serveurs 16 et 18 par l'intermédiaire du module WAN 122.

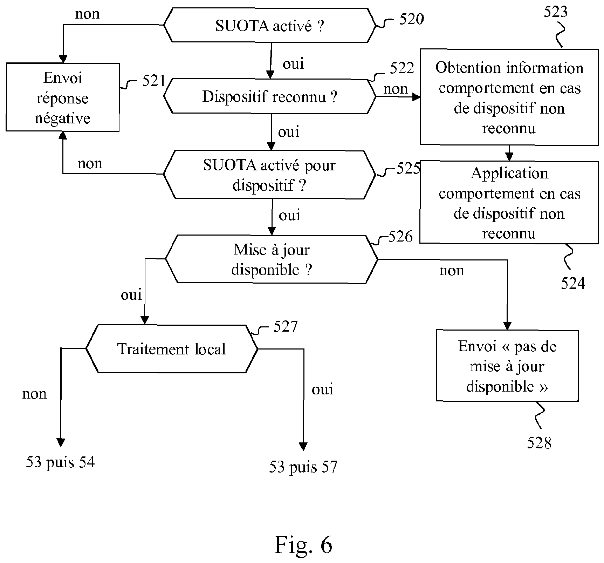

Le processeur 1211 est capable d'exécuter des instructions chargées dans la RAM 1212 à partir de la ROM 1213, d'une mémoire externe (non représentée), d'un support de stockage, tel qu'une carte SD, ou d'un réseau de communication. Lorsque la passerelle 12 est mise sous tension, le processeur 1211 est capable de lire de la RAM 1212 des instructions et de les exécuter. Ces instructions forment un programme d'ordinateur causant la mise en œuvre, par le processeur 1211, du procédé décrit en relation avec les Figs. 5 et 6.

Tout ou partie du procédé décrit en relation avec les Figs. 5 et 6 peut être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

La **Fig. 5** illustre schématiquement un exemple de procédé de mise à jour d'un dispositif DECT 10 selon l'invention.

Le procédé décrit en relation avec la Fig. 5 diffère du procédé de l'art antérieur décrit en relation avec le Fig. 4 en ce que la passerelle 12 a la possibilité de modifier à la fois le serveur de gestion et le serveur de téléchargement auquel s'adresse le dispositif DECT 10. Le procédé de la Fig. 5 modifie donc le fonctionnement classique de la norme DECT CAT-iq.

Dans une étape 50, similaire à l'étape 40, le module de traitement 121 intercepte une première requête contenant une commande CMBS_EV_DSR_SUOTA_HS_VERSION_INDICATION et une deuxième requête comprenant une commande CMBS_EV_DSR_SUOTA_URL_RECEIVED. Le contenu de la première et de la deuxième requêtes est identique à celui décrit en relation avec l'étape 40. La deuxième requête comprend donc une adresse d'un serveur de gestion auquel la première requête est destinée et l'ensemble constitué de la première et de la deuxième requêtes a pour but d'obtenir une adresse d'un serveur de téléchargement avec lequel le dispositif DECT 10 doit être mis en relation.

Dans une étape 51, le module de traitement 121 analyse la première requête afin d'obtenir au moins un identifiant du dispositif 10. Dans un mode de réalisation, le module de traitement 121 obtient la valeur *emc* de l'information *EMC*, la valeur *swvid* de l'information *SWvid* et la valeur *hwvid* de l'information *HWvid*.

Dans une étape 52, le module de traitement 121 détermine un traitement à appliquer à ladite première requête, parmi une pluralité de traitements, en fonction de l'identifiant du dispositif DECT 10 et d'une information de configuration obtenue d'un opérateur en charge de la passerelle 12. L'information de configuration comprend une information représentative d'un ensemble de dispositifs DECT reconnu par le module de traitement. La pluralité de traitements comprend un traitement, appelé redirection, appliqué lorsque le dispositif appartient audit ensemble de dispositifs consistant à répondre à la requête sans mettre à contribution le premier serveur.

L'information de configuration a été fournie par l'opérateur en charge de la passerelle 12 en utilisant un protocole de type TR-069. Le protocole TR-069 a été défini pour gérer des communications entre un équipement terminal (tel qu'une passerelle) situé dans un LAN et un serveur situé sur un WAN. Il offre à un opérateur un ensemble de services d'administration, de contrôle et de diagnostic.

Dans un mode de réalisation, l'opérateur en charge de la passerelle 12 met à jour l'information de configuration soit à intervalles réguliers prédéfinis, soit dès qu'une nouvelle version d'un logiciel d'un des dispositifs DECT référencés dans l'information représentative d'un ensemble de dispositifs DECT reconnu par le module de traitement 121 est disponible ou encore dès qu'un changement dans l'information de configuration intervient (par exemple lors d'un ajout d'un nouveau dispositif DECT dans l'ensemble de dispositifs DECT reconnu par le module de traitement 121).

La Fig. 6 illustre schématiquement en détail l'étape 52.

Dans une étape 520, le module de traitement 121 détermine s'il implémente une fonctionnalité de mise à jour de type SUOTA. Si non, il envoie une réponse négative au dispositif DECT 10 lors d'une étape 521. Dans ce cas, le dispositif DECT 10 ne peut pas être mis à jour par l'intermédiaire de la passerelle 12.

Si le module de traitement 121 implémente une fonctionnalité de mise à jour de type SUOTA, dans une étape 522, le module de traitement 121 détermine s'il reconnait le dispositif DECT 10. Pour ce faire, il détermine en comparant la valeur *emc, la valeur hwvid et la valeur swvid* à l'information représentative de l'ensemble de dispositifs DECT, si le dispositif DECT 10 est représenté dans ledit ensemble. En effet, ces trois informations sont utilisées pour identifier le dispositif DECT 10.

Si le dispositif DECT 10 n'est pas reconnu, le module de traitement 121 obtient, lors d'une étape 523, une information représentative d'un comportement à adopter en cas de non reconnaissance d'un dispositif DECT. Cette information représentative d'un comportement à adopter a été fournie par l'opérateur en charge de la passerelle 12 en utilisant le protocole de type TR-069. Plusieurs types de comportements peuvent être définis par l'opérateur. Dans un mode de réalisation, le comportement à adopter en cas de non reconnaissance d'un dispositif DECT est de renvoyer une réponse négative au dispositif DECT. Le module de traitement 121 mettrait alors en œuvre dans ce cas l'étape 521 déjà expliquée. Dans un mode de réalisation, le comportement à adopter en cas de non reconnaissance d'un dispositif DECT est d'appliquer le procédé de l'art antérieur décrit en relation avec la Fig. 4 (c'est-à-dire les étapes 41 à 47).

L'étape 523 est suivie d'une étape 524 au cours de laquelle le module de traitement 121 applique le comportement à adopter obtenu lors de l'étape 523.

Lorsque le dispositif DECT 10 est reconnu par le module de traitement 121, le module de traitement 121 détermine si une fonction de mise à jour de type SUOTA est disponible pour le dispositif DECT 10. Pour ce faire, le module de traitement 121 vérifie dans l'information de configuration qu'une fonction de mise à jour de type SUOTA est activée pour un dispositif DECT dont l'information *EMC* a une valeur *emc,* l'information *HWvid* a une valeur *hwvid* et l'information *SWvid* a une valeur swvid.

Si aucune fonction de mise à jour de type SUOTA n'est activée pour le dispositif DECT 10, le module de traitement 121 exécute l'étape 521 déjà expliquée.

Sinon, le module de traitement 121 détermine lors d'une étape 526 si une mise à jour est disponible pour le dispositif DECT 10.

L'information de configuration fournie par l'opérateur comprend pour chaque dispositif DECT identifiable par la valeur *emc* de son information *EMC,* la valeur *hwvid* de son information *HWvid,* et la valeur *swvid* de son information *SWvid,* une information *SW_UPDATE_vid.* Si cette information est vide, aucune mise à jour n'est disponible pour ledit dispositif DECT. Si cette information est non vide, une mise à jour est disponible pour ledit dispositif DECT. Le module de traitement 121 examine donc l'information *SW_UPDATE_vid* pour déterminer si une mise à jour est disponible pour le dispositif DECT 10. Si une mise à jour est disponible (si l'information *SW_UPDATE_vid* est non vide), le module de traitement 121 exécute une étape 527. Sinon, le module de traitement 121 exécute une étape 528.

Au cours de l'étape 528, le module de traitement 121 envoie un message au dispositif DECT 10 pour l'informer qu'aucune mise à jour n'est disponible. Dans ce cas, le dispositif DECT 10 renouvellera sa tentative de mise à jour plus tard, par exemple après une période d'attente prédéfinie de « 24 » heures.

Au cours de l'étape 527, le module de traitement 121 détermine s'il peut répondre à la requête du dispositif DECT 10 avec des informations qu'il possède sans faire intervenir un serveur de gestion. On dit dans ce cas que le module de traitement 121 met en œuvre un traitement local. Pour que cela soit possible, il faut que l'information de configuration comprenne pour le dispositif DECT 10 identifié par la valeur *emc* de son information *EMC,* la valeur *hwvid* de son information *HWvid* et la valeur *swvid* de son information *SWvid,* une adresse URL *FP_URL3* correspondant à l'adresse du logiciel à télécharger *(i.e.* l'adresse d'un serveur de téléchargement capable de fournir la mise à jour du logiciel souhaitée). Dans un mode de réalisation, le serveur de téléchargement capable de fournir la mise à jour du logiciel souhaitée est le serveur de téléchargement 18.

Si le module de traitement 121 a localement les informations pour mettre en œuvre un traitement local, il passe à une étape 53 puis à une étape 57 pour fournir une réponse au dispositif DECT 10 contenant l'adresse URL *FP_URL3.* Sinon il passe à l'étape 53 puis à une étape 54 pour mettre en œuvre un traitement, dit traitement distant, dans lequel l'adresse URL *FP_URL3* correspondant à l'adresse du logiciel à télécharger est fournie par un serveur de gestion différent du serveur de gestion spécifié dans la requête interceptée lors de l'étape 50, *i.e.* l'adresse URL *url.*

On note donc que dans les deux cas possibles suite à l'étape 527, *i.e.* traitement local et traitement distant, le module de traitement 121 effectue une redirection de la requête du dispositif DECT 10. En effet, le module de traitement 10 n'utilise pas l'adresse URL *url* indiquée dans la requête reçue lors de l'étape 50 et donc ne sollicite pas le serveur de gestion pointé par cette adresse URL. Soit il répond lui-même à la requête, dans ce cas on parle d'une redirection locale, soit il répond en faisant intervenir un serveur de gestion de son choix, dans ce cas on parle de redirection distante.

De retour à la Fig. 5, dans le cas d'une redirection locale, lors de l'étape 53 le module de traitement 121 modifie le serveur de gestion puisqu'il s'assigne ce rôle. Le module de traitement 121 devient alors serveur de gestion en lieu et place du serveur de gestion spécifié dans la requête interceptée lors de l'étape 50.

Dans l'étape 57, le module de traitement fournit au dispositif DECT 10 une réponse à la requête interceptée lors de l'étape 50. Cette réponse comprend l'identifiant *SW_UPDATE_vid* du logiciel à télécharger pour effectuer la mise à jour dans une commande CMBS_EV_DSR_SUOTA_SEND_VERS_AVAIL_RES et l'URL *FP_URL3* dans une commande CMBS_EV_DSR_SUOTA_SEND_URL_RES.

L'étape 57 est suivie d'une étape 58 au cours de laquelle la passerelle intercepte une requête en provenance du dispositif DECT 10 contenant une commande destinée à télécharger une version du logiciel dont l'identifiant est *SW_UPDATE_vid* à l'adresse *FP_URL3.*

Dans une étape 59, le module de traitement 12 met en forme cette requête sous forme d'une commande HTTP GET et la transmet à l'adresse indiquée lors d'une étape 60.

Dans le cas d'une redirection distante, lors de l'étape 53 le module de traitement 121 modifie le serveur de gestion et assigne ce rôle à un serveur de gestion de son choix. Dans un mode de réalisation, le serveur de gestion défini par le module de traitement 121 possède une adresse URL *url_redirect.* Dans l'exemple de la Fig. 1, le serveur de gestion d'adresse URL *url_redirect* est le serveur de gestion 16. Le serveur de gestion 16 remplace le serveur de gestion d'adresse URL *url* spécifié dans la requête interceptée lors de l'étape 50.

Dans une étape 54, la passerelle met en forme les informations *EMC, SWvid* et *HWvid* dans une requête HTTP, *i.e.* la passerelle construit une URL *FP_URL4* telle que:

FP_URL4 = url_redirect?EMC=emc?SWvid=swvid?HWvid=hwvid

Dans une étape 55, la passerelle transmet la requête ainsi construite (par une commande HTTP GET) vers le serveur de gestion 16, *i.e.* vers le destinataire indiqué par l'URL FP_URL4.

Dans une étape 56, la passerelle reçoit une réponse du serveur de gestion 16 (sous forme de commande HTTP 200 OK) contenant un identifiant *SW_UPDATE_vid* du logiciel à télécharger pour effectuer la mise à jour, et l'adresse URL *FP_URL3* correspondant à l'adresse du logiciel à télécharger *(i.e.* l'adresse d'un serveur de téléchargement capable de fournir la mise à jour du logiciel souhaitée).

L'étape 56 est suivie des étapes 57, 58, 59 et 60 déjà expliquées.

On note donc que dans chaque type de redirections, redirection locale et redirection distante, le module de traitement 121, et donc la passerelle 12, contrôlent le choix du serveur de gestion et du serveur de téléchargement devant être utilisés par le dispositif DECT 10.

## Revendications

1. Procédé de gestion à distance d'un dispositif connecté à un réseau local, ledit réseau local étant connecté à un réseau internet par l'intermédiaire d'une passerelle résidentielle, dite passerelle, le procédé étant **caractérisé en ce qu'**il comprend, lorsqu'il est exécuté par la passerelle :

   intercepter (50) une première requête en provenance du dispositif comprenant une adresse d'un premier serveur auquel la première requête est destinée, la première requête ayant pour but d'obtenir une adresse d'un deuxième serveur avec lequel le dispositif doit être mis en relation ;
   analyser (51) ladite première requête afin d'obtenir au moins un identifiant du dispositif ;
   déterminer (52) un traitement à appliquer à ladite première requête, parmi une pluralité de traitements, en fonction de l'identifiant du dispositif et d'une information de configuration obtenue d'un opérateur, ladite information de configuration comprenant une information représentative d'un ensemble de dispositifs, la pluralité de traitements comprenant un traitement, appelé redirection, appliqué lorsque le dispositif appartient audit ensemble de dispositifs consistant à répondre à la première requête sans mettre à contribution le premier serveur ;
   lorsque le traitement à appliquer est une redirection, fournir (57) audit dispositif une réponse à ladite première requête contenant l'adresse du deuxième serveur afin que le dispositif puisse se mettre en relation avec le deuxième serveur.

2. Procédé selon la revendication 1, **caractérisé en ce que** la pluralité de traitements comprend deux types de redirections, une redirection locale et une redirection distante, dans la redirection locale, la passerelle a connaissance de l'adresse du deuxième serveur et génère sa réponse en utilisant cette adresse, dans la redirection distante, la passerelle génère une deuxième requête contenant les informations contenues dans la première requête, transmet la deuxième requête à un troisième serveur différent du premier serveur, reçoit une réponse contenant l'adresse du deuxième serveur de la part du troisième serveur et génère sa réponse en utilisant cette adresse.

3. Procédé selon la revendication 1 ou 2, **caractérisé en ce que** la pluralité de traitements comprend en outre un traitement, dit traitement par défaut, à appliquer lorsque le dispositif n'appartient pas audit ensemble de dispositifs, le traitement par défaut consistant à générer une troisième requête à partir des informations contenues dans la première requête, à transmettre la troisième requête au premier serveur, puis à fournir audit dispositif une réponse à ladite première requête contenant une adresse d'un quatrième serveur fournie par le premier serveur afin que le dispositif puisse se mettre en relation avec le quatrième serveur ou consistant à transmettre une réponse au dispositif indiquant qu'aucune suite ne peut être donnée à la première requête.

4. Procédé selon la revendication 1, 2 ou 3, **caractérisé en ce que** la première requête est une demande de mise à jour d'un logiciel du dispositif, une redirection ou un traitement par défaut étant appliqué après vérification que la passerelle est apte à gérer des demandes de mises à jour émanant dudit dispositif, la pluralité de traitements comprenant transmettre une réponse au dispositif indiquant qu'aucune suite ne peut être donnée à la requête lorsque la passerelle n'est pas apte à traiter des demandes de mises à jour émanant dudit dispositif.

5. Procédé selon la revendication 4, **caractérisé en ce que** lorsque la passerelle est apte à gérer des demandes de mises à jour émanant dudit dispositif, la passerelle vérifie en utilisant une information lui ayant été préalablement fournie par l'opérateur, qu'une mise à jour du logiciel est disponible, exécute une redirection lorsqu'une mise à jour est disponible ou transmet une réponse au dispositif indiquant qu'aucune mise à jour n'est disponible.

6. Procédé selon l'une quelconque des revendications précédentes, **caractérisé en ce que** le dispositif est un dispositif implémentant la norme DECT CAT iq data et communicant avec la passerelle selon cette norme.

7. Dispositif pour une passerelle résidentielle, dite passerelle, interconnectant un réseau local à un réseau internet, le dispositif étant **caractérisé en ce qu'**il comprend:

   des moyens d'interception (50) pour intercepter une première requête en provenance d'un deuxième dispositif du réseau local, ladite requête comprenant une adresse d'un premier serveur auquel la première requête est destinée, la première requête ayant pour but d'obtenir une adresse d'un deuxième serveur avec lequel le deuxième dispositif doit être mis en relation ;
   des moyens d'analyse (51) pour analyser ladite première requête afin d'obtenir au moins un identifiant du deuxième dispositif ;
   des moyens de détermination (52) pour déterminer un traitement à appliquer à ladite première requête parmi une pluralité de traitements, en fonction de l'identifiant du deuxième dispositif et d'une information de configuration obtenue d'un opérateur, ladite information de configuration comprenant une information représentative d'un ensemble de deuxièmes dispositifs, la pluralité de traitements comprenant un traitement, appelé redirection, appliqué lorsque le deuxième dispositif appartient audit ensemble de deuxièmes dispositifs consistant à répondre à la requête sans mettre à contribution le premier serveur ;
   des moyens de fourniture (57) pour fournir audit deuxième dispositif une réponse à ladite première requête contenant l'adresse du deuxième serveur afin que le deuxième dispositif puisse se mettre en relation avec le deuxième serveur.

8. Passerelle résidentielle comprenant un dispositif selon la revendication 7.

9. Programme d'ordinateur, **caractérisé en ce qu'**il comprend des instructions pour mettre en œuvre, par un dispositif, le procédé selon l'une quelconque des revendications 1 à 6 lorsque ledit programme est exécuté par un processeur dudit dispositif.

10. Moyens de stockage, **caractérisés en ce qu'**ils stockent un programme d'ordinateur comprenant des instructions pour mettre en œuvre, par un dispositif, le procédé selon l'une quelconque des revendications 1 à 6 lorsque ledit programme est exécuté par un processeur dudit dispositif.

**Patentansprüche**

1. Verfahren zur Fernverwaltung einer mit einem lokalen Netz verbundenen Vorrichtung, wobei das lokale Netz mit einem Internetnetz über ein Gateway genanntes Residential Gateway verbunden ist, wobei das Verfahren **dadurch gekennzeichnet, dass** es enthält, wenn es vom Gateway ausgeführt wird:

   Abfangen (50) einer von der Vorrichtung kommenden ersten Anforderung, die eine Adresse eines ersten Servers enthält, für den die erste Anforderung bestimmt ist, wobei die erste Anforderung zum Ziel hat, eine Adresse eines zweiten Server zu erhalten, mit dem die Vorrichtung verbunden werden soll;
   Analysieren (51) der ersten Anforderung, um mindestens eine Kennung der Vorrichtung zu erhalten;
   Bestimmen (52) einer an die erste Anforderung anzuwendenden Verarbeitung unter einer Vielzahl von Verarbeitungen, abhängig von der Kennung der Vorrichtung und einer von einem Operator erhaltenen Konfigurationsinformation, wobei die Konfigurationsinformation eine für eine Gruppe von Vorrichtungen repräsentative Information enthält, wobei die Vielzahl von Verarbeitungen eine Weiterleitung genannte Verarbeitung enthält, die angewendet wird, wenn die Vorrichtung zur Gruppe von Vorrichtungen gehört, die darin besteht, auf die erste Anforderung zu antworten, ohne den ersten Server hinzuzuziehen;
   wenn die anzuwendende Verarbeitung eine Weiterleitung ist, Liefern (57) an die Vorrichtung einer Antwort auf die erste Anforderung, die die Adresse des zweiten Servers enthält, damit die Vorrichtung sich mit dem zweiten Server in Verbindung setzen kann.

2. Verfahren nach Anspruch 1, **dadurch gekennzeichnet, dass** die Vielzahl von Verarbeitungen zwei Arten von Weiterleitungen enthält, eine lokale Weiterleitung und eine ferne Weiterleitung, bei der lokalen Weiterleitung hat das Gateway Kenntnis der Adresse des zweiten Servers und generiert seine Antwort unter Verwendung dieser Adresse, bei der fernen Weiterleitung generiert das Gateway eine zweite Anforderung, die die in der ersten Anforderung enthaltenen Informationen enthält, überträgt die zweite Anforderung an einen dritten Server anders als der erste Server, empfängt eine die Adresse des zweiten Servers enthaltende Antwort vom dritten Server und generiert seine Antwort unter Verwendung dieser Adresse.

3. Verfahren nach Anspruch 1 oder 2, **dadurch gekennzeichnet, dass** die Vielzahl von Verarbeitungen außerdem eine Standardverarbeitung genannte Verarbeitung enthält, die anzuwenden ist, wenn die Vorrichtung nicht zur Gruppe von Vorrichtungen gehört, wobei die Standardverarbeitung darin besteht, eine dritte Anforderung ausgehend von den in der ersten Anforderung enthaltenen Informationen zu generieren, die dritte Anforderung an den ersten Server zu übertragen, dann der Vorrichtung eine Antwort auf die erste Anforderung zu liefern, die eine vom ersten Server gelieferte Adresse eines vierten Servers enthält, damit die Vorrichtung sich mit dem vierten Server in Verbindung setzen kann, oder darin besteht, eine Antwort an die Vorrichtung zu übertragen, die anzeigt, dass der ersten Anforderung nicht Folge geleistet werden kann.

4. Verfahren nach Anspruch 1, 2 oder 3, **dadurch gekennzeichnet, dass** die erste Anforderung eine Aktualisierungsanforderung einer Software der Vorrichtung ist, wobei eine Weiterleitung oder eine Standardverarbeitung nach der Überprüfung angewendet wird, dass das Gateway geeignet ist, von der Vorrichtung stammende Aktualisierungsanforderungen zu verwalten, wobei die Vielzahl von Verarbeitungen die Übertragung einer Antwort an die Vorrichtung enthält, die anzeigt, dass der Anforderung nicht Folge geleistet werden kann, wenn das Gateway nicht geeignet ist, von der Vorrichtung stammende Aktualisierungsanforderungen zu verarbeiten.

5. Verfahren nach Anspruch 4, **dadurch gekennzeichnet, dass**, wenn das Gateway geeignet ist, von der Vorrichtung stammende Aktualisierungsanforderungen zu verwalten, das Gateway unter Verwendung einer Information, die ihm vorher vom Operator geliefert wurde, überprüft, dass eine Aktualisierung der Software zur Verfügung steht, eine Weiterleitung ausführt, wenn eine Aktualisierung zur Verfügung steht, oder eine Antwort an die Vorrichtung überträgt, die anzeigt, dass keine Aktualisierung zur Verfügung steht.

6. Verfahren nach einem der vorhergehenden Ansprüche, **dadurch gekennzeichnet, dass** die Vorrichtung eine Vorrichtung ist, die die Norm DECT CAT iq data implementiert und mit dem Gateway gemäß dieser Norm kommuniziert.

7. Vorrichtung für ein Gateway genanntes Residential Gateway, das ein lokales Netz mit einem Internetnetz verbindet, wobei die Vorrichtung **dadurch gekennzeichnet ist, dass** sie enthält:

Abfangeinrichtungen (50) zum Abfangen einer von einer zweiten Vorrichtung des lokalen Netzes kommenden ersten Anforderung, wobei die Anforderung eine Adresse eines ersten Servers enthält, für den die erste Anforderung bestimmt ist, wobei die erste Anforderung zum Ziel hat, eine Adresse eines zweiten Servers zu erhalten, mit dem die zweite Vorrichtung in Verbindung gesetzt werden soll;
Analyseeinrichtungen (51) zur Analyse der ersten Anforderung, um mindestens eine Kennung der zweiten Vorrichtung zu erhalten;
Bestimmungseinrichtungen (52) zur Bestimmung einer an die erste Anforderung anzuwendenden Verarbeitung unter einer Vielzahl von Verarbeitungen abhängig von der Kennung der zweiten Vorrichtung und einer von einem Operator erhaltenen Konfigurationsinformation, wobei die Konfigurationsinformation eine für eine Gruppe von zweiten Vorrichtungen repräsentative Information enthält, wobei die Vielzahl von Verarbeitungen eine Weiterleitung genannte Verarbeitung enthält, die angewendet wird, wenn die zweite Vorrichtung zur Gruppe zweiter Vorrichtungen gehört, die darin besteht, auf die Anforderung zu antworten, ohne den ersten Server heranzuziehen;
Liefereinrichtungen (57) zum Liefern an die zweite Vorrichtung eine Antwort auf die erste Anforderung, die die Adresse des zweiten Servers enthält, damit die zweite Vorrichtung sich mit dem zweiten Server in Verbindung setzen kann.

8. Residential Gateway, das eine Vorrichtung nach Anspruch 7 enthält.

9. Computerprogramm, **dadurch gekennzeichnet, dass** es Anweisungen enthält, um das Verfahren nach einem der Ansprüche 1 bis 6 durch eine Vorrichtung durchzuführen, wenn das Programm von einem Prozessor der Vorrichtung ausgeführt wird.

10. Speichereinrichtungen, **dadurch gekennzeichnet, dass** sie ein Computerprogramm speichern, das Anweisungen enthält, um das Verfahren nach einem der Ansprüche 1 bis 6 durch eine Vorrichtung durchzuführen, wenn das Programm von einem Prozessor der Vorrichtung ausgeführt wird.

**Claims**

1. Method for the remote management of a device connected to a local area network, said local area network being connected to an internet network by means of a residential gateway, referred to as a gateway, the method being **characterised in that** it comprises, when it is executed by the gateway:

   intercepting (50) a first request coming from the device comprising an address of a first server for which the first request is intended, the purpose of the first request being to obtain an address of a second server with which the device must be connected;
   analysing (51) said first request in order to obtain at least one identifier of the device;
   determining (52) a processing operation to be applied to said first request, from among a plurality of processing operations, according to the identifier of the device and configuration information obtained from an operator, said configuration information comprising information representing a set of devices, the plurality of processing operations comprising a processing operation, called redirection, applied when the device belongs to said set of devices consisting of responding to the first request without contributing the first server;
   when the processing operation to be applied is a redirection, supplying (57) to said device a response to said first request containing the address of the second server so that the device can connect with the second server.

2. Method according to claim 1, **characterised in that** the plurality of processing operations comprise two types of redirection, a local redirection and a remote redirection, in the local redirection the gateway has knowledge of the address of the second server and generates its response using this address, in the remote redirection the gateway generates a second request containing the information contained in the first request, transmits the second request to a third server different from the first server, receives a response containing the address of the second server from the third server and generates its response using this address.

3. Method according to claim 1 or 2, **characterised in that** the plurality of processing operations further comprise a processing operation, called default processing, to be applied when the device does not belong to said set of devices, the default processing consisting of generating a third request from the information contained in the first request, transmitting the third request to the first server, and then supplying to said device a response to said first request containing an address of a fourth server supplied by the first server so that the device can connect with the fourth server, or consisting of transmitting a response to the device indicating that the first request cannot be dealt with.

4. Method according to claim 1, 2 or 3, **characterised in that** the first request is a request to update software of the device, a redirection or a default processing being applied after verification that the gateway is able to manage update requests emanating from said device, the plurality of processing operations comprising transmitting a response to the device indicating that the request cannot be dealt with when the gateway is not able to process update requests emanating from said device.

5. Method according to claim 4, **characterised in that**, when the gateway is able to manage update requests emanating from said device, the gateway checks, using information that was previously supplied to it by the operator, that an update of the software is available, performs a redirection when an update is available or transmits a response to the device indicating that no update is available.

6. Method according to any one of the preceding claims, **characterised in that** the device is a device implementing the DECT CAT iq data standard and communicating with the gateway in accordance with this standard.

7. Device for a residential gateway, referred to as a gateway, interconnecting a local network to an internet network, the device being **characterised in that** it comprises:

interception means (50) for intercepting a first request coming from a second device in the local network, said request comprising an address of a first server for which the first request is intended, the purpose of the first request being to obtain an address of a second server with which the second device must be connected;

analysis means (51) for analysing said first request in order to obtain at least one identifier of the second device;

determination means (52) for determining a processing operation to be applied to said first request among a plurality of processing operations, according to the identifier of the second device and configuration information obtained from an operator, said configuration information comprising information representing a set of second devices, the plurality of processing operations comprising a processing operation, called redirection, applied when the second device belongs to said set of second devices consisting of responding to the request without contributing the first server;

supply means (57) for supplying to said second device a response to said first request containing the address of the second server so that the second device can connect with the second server.

8. Residential gateway comprising a device according to claim 7.

9. Computer program, **characterised in that** it comprises instructions for implementing, by a device, the method according to any one of claims 1 to 6 when said program is executed by a processor of said device.

10. Storage means, **characterised in that** they store a computer program comprising instructions for implementing, by a device, the method according to any one of claims 1 to 6 when said program is executed by a processor of said device.

1

Fig. 1

Fig. 2

Fig. 3

Interception
requêtes
terminal — 40

Formatage
requête — 41

Transmettre
requête
serveur de
gestion — 42

Recevoir
réponse — 43

Fournir
réponse au
terminal — 44

Interception
messages
terminal — 45

Formatage
requête — 46

Transmettre
requête serveur de
téléchargement — 47

Fig. 4

Interception
requêtes
terminal — 50

Analyse
requêtes — 51

Déterminer
traitement — 52

Modifier
serveur de
gestion — 53

Formatage
requête — 54

Transmettre
requête
serveur de
gestion — 55

Recevoir
réponse — 56

Fournir
réponse au
terminal — 57

Interception
messages
terminal — 58

Formatage
requête — 59

Transmettre
requête serveur de
téléchargement — 60

Fig. 5

13

SUOTA activé ? ⟩ 520

non

Envoi
réponse
négative ⟩ 521

oui

Dispositif reconnu ? ⟩ 522

non

523

Obtention information
comportement en cas
de dispositif non
reconnu

oui

SUOTA activé pour
dispositif ? ⟩ 525

non

Application
comportement en cas
de dispositif non
reconnu

oui

524

Mise à jour
disponible ? ⟩ 526

non

oui

Traitement local ⟩ 527

Envoi « pas de
mise à jour
disponible »

non

oui

528

53 puis 54

53 puis 57

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008055081 A

- WO 2016093724 A